# EUROPEAN PATENT APPLICATION

(11) **EP 4 379 498 A1**
(43) Date of publication of application: **05.06.2024**
(21) Application number: 22864828.3
(22) Date of filing: 07.06.2022
(51) Int. Cl.: G06F 1/16, G05B 19/04, H02P 6/06, H02P 6/30, H02K 11/25

(54) **DISPLAY CONTROL METHOD AND ELECTRONIC DEVICE FOR SUPPORTING SAME**

(30) Priority: 30.08.2021 KR 20210114907
(71) Applicant: Samsung Electronics Co., Ltd., Suwon-si, Gyeonggi-do 16677 (KR)
(72) Inventor: KIM, Kibeom, Suwon-si Gyeonggi-do 16677 (KR); KIM, Youngrog, Suwon-si Gyeonggi-do 16677 (KR); CHOI, Junwoo, Suwon-si Gyeonggi-do 16677 (KR); KWAK, Myunghoon, Suwon-si Gyeonggi-do 16677 (KR); LEE, Jookwan, Suwon-si Gyeonggi-do 16677 (KR); HEO, Changryong, Suwon-si Gyeonggi-do 16677 (KR); KIM, Yangwook, Suwon-si Gyeonggi-do 16677 (KR); LEE, Junghyeob, Suwon-si Gyeonggi-do 16677 (KR)
(74) Representative: Gulde & Partner
(86) International application number: PCT/KR2022/008017
(87) International publication number: WO 2023/033319

(57) **Abstract**

Disclosed is an electronic device comprising: a flexible display including a first state in which a display area has a first size and a second state in which the display area is extended in a first direction so as to have a second size that is larger than the first size; a motor driven in order to change the state of the flexible display; and a processor operatively connected to the flexible display and the motor, wherein the processor is configured to determine, if an input for driving the motor is received, the driving speed of the motor on the basis of the driving pattern of the motor and drive the motor on the basis of the driving speed of the motor. Other various embodiments identified through the present document are possible.

## Description

### [Technical Field]

Various embodiments of the disclosure relate to a control technology of a display.

### [Background Art]

Recently, electronic devices such as smartphones become more lightweight, thinner, shorter, and smaller for ease in carrying, and are developing in various fields for the sake of use convenience. In order to meet users' demand for miniaturization of electronic devices and enlargement of screens, a solution of utilizing flexibility of flexible displays is being considered. As one example of such a solution, electronic devices of rollable types (or sliding types) including flexible displays are being developed.

Such an electronic device of the rollable type has a size of a screen reduced when a part of a flexible display is drawn into (for example, is rolled in or slides in) a housing of the electronic device, so that the size of the electronic device is reduced and the electronic device is easy to carry. On the other hand, when the drawn-in part of the flexible display is drawn out (for example, is rolled out or slides out), the size of the screen increases, so that the electronic device provides a relatively large screen compared to an existing electronic device of a bar type and use convenience is enhanced.

### [Disclosure of Invention]

### [Technical Problem]

An electronic device of a rollable type may apply an electrical driving method to make it easy to change a state of a flexible display. For example, the electronic device may include a motor to draw in or draw out the flexible display. In this case, the electronic device may drive the motor in response to an input for driving the motor.

However, when the motor is frequently driven, heat may be generated due to an increased temperature of the motor and a load exerted to a whole system.

In addition, the heat of the motor may be influenced by a driving duration time of the motor more than by a driving speed of the motor. For example, the temperature of the motor may slightly increase even when the driving speed of the motor increases, and the temperature of the motor may greatly increase as the driving duration time of the motor increases. Accordingly, considering that a deviation of heat of the motor caused by the driving speed of the motor is small, the driving speed of the motor may be controlled when the state of the flexible display is changed, so that inconvenience in use of the electronic device can be reduced and heat caused by driving of the motor can be reduced.

Various embodiments of the disclosure provide a control method of a display which adjusts a driving speed of a motor when heat is predicted due to driving of the motor, and an electronic device supporting the same.

### [Solution to Problem]

According to various embodiments of the disclosure, an electronic device may include: a flexible display including a first state in which a display area has a first size, and a second state in which the display area is extended in a first direction to have a second size that is larger than the first size; a motor driven to change the state of the flexible display; and a processor operatively connected with the flexible display and the motor, and the processor may be configured to determine a driving speed of the motor based on a driving pattern of the motor when an input for driving the motor is received, and to drive the motor based on the driving speed of the motor.

In addition, according to various embodiments of the disclosure, a display control method of an electronic device may include: receiving an input for driving a motor which is driven to change a state of a flexible display, the flexible display including a first state in which a display area has a first size, and a second state in which the display area is extended in a first direction to have a second size that is larger than the first size; determining a driving speed of the motor based on a driving pattern of the motor; and driving the motor based on the driving speed of the motor.

### [Advantageous Effects of Invention]

According to various embodiments of the disclosure, heat caused by driving of a motor may be reduced by adjusting a driving speed of the motor.

In addition, according to various embodiments, by adjusting a driving speed of a motor according to circumstances of an electronic device, heat caused by driving of a motor may be reduced while inconvenience in use of an electronic device may be reduced.

Various effects that are directly or indirectly understood through the disclosure may be provided.

### [Brief Description of Drawings]

FIG. 1 is a block diagram of an electronic device in a network environment according to various embodiments of the disclosure;
FIG. 2 is a view provided to explain an electronic device in a first state of a flexible display according to an embodiment of the disclosure;
FIG. 3 is a view provided to explain the electronic device in a second state of the flexible display according to an embodiment of the disclosure;
FIG. 4 is a perspective view of an electronic device provided to explain change of a state of a flexible display according to an embodiment of the disclosure;
FIG. 5 is a view provided to explain a method of controlling a display by adjusting a driving speed of a motor according to an embodiment of the disclosure;
FIG. 6 is a view provided to explain a method of adjusting a driving speed of a motor based on the number of times of driving the motor according to an embodiment of the disclosure;
FIG. 7 is a view provided to explain a method of calibrating the number of times of driving a motor according to an embodiment of the disclosure;
FIG. 8 is a view provided to explain a method of adjusting a driving speed of a motor based on the number of times of driving the motor and a measured temperature of an electronic device according to an embodiment of the disclosure;
FIG. 9 is a view provided to explain another method of adjusting the driving speed of the motor based on a driving time of the motor according to an embodiment of the disclosure; and
FIG. 10 is a view provided to explain a method of adjusting a driving speed of a motor based on a driving direction of the motor according to an embodiment of the disclosure.

Regarding explanation of the drawings, the same or similar reference numerals may be used for the same or similar elements.

### [Mode for Carrying out the Invention]

Hereinafter, various embodiments of the disclosure will be described with reference to the accompanying drawings. For the convenience of explanation, the components illustrated in the drawings may have their sizes exaggerated or reduced, and the disclosure is not limited to those illustrated in the drawings.

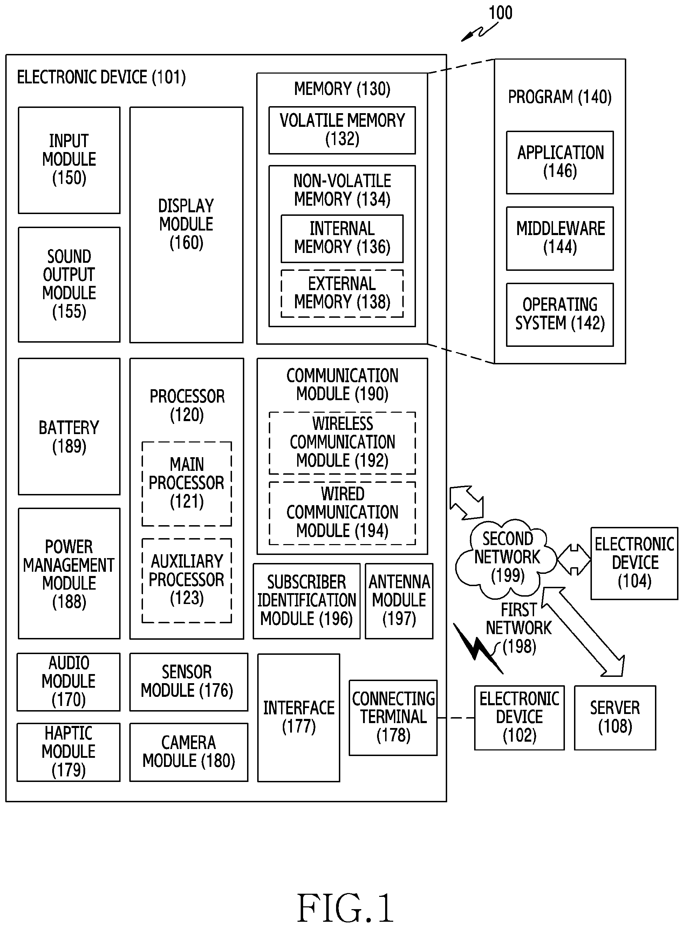

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adj acent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

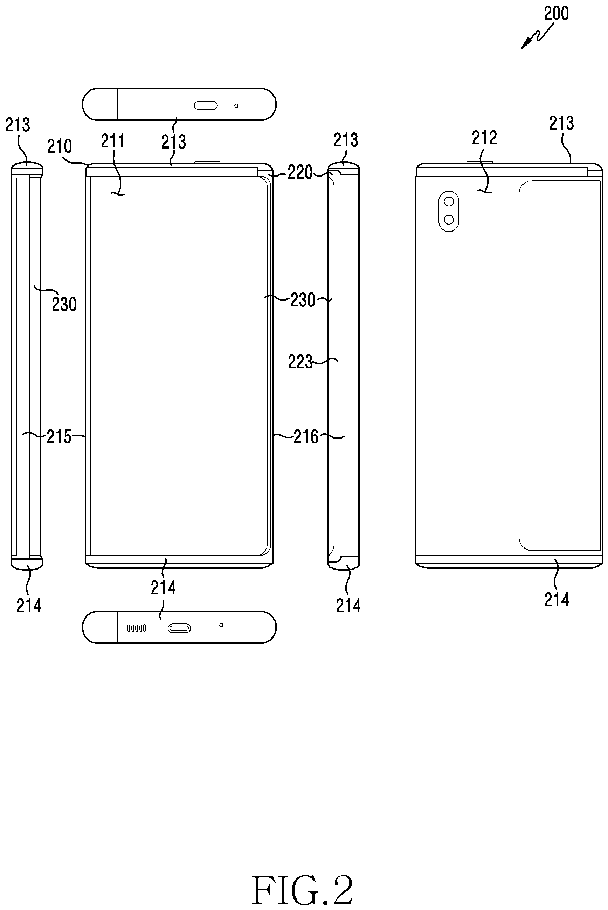

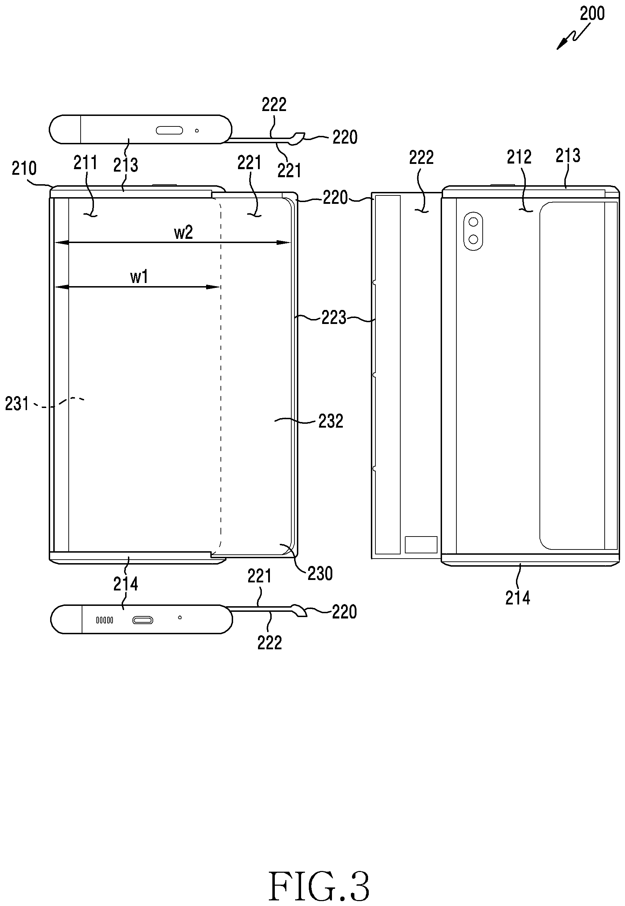

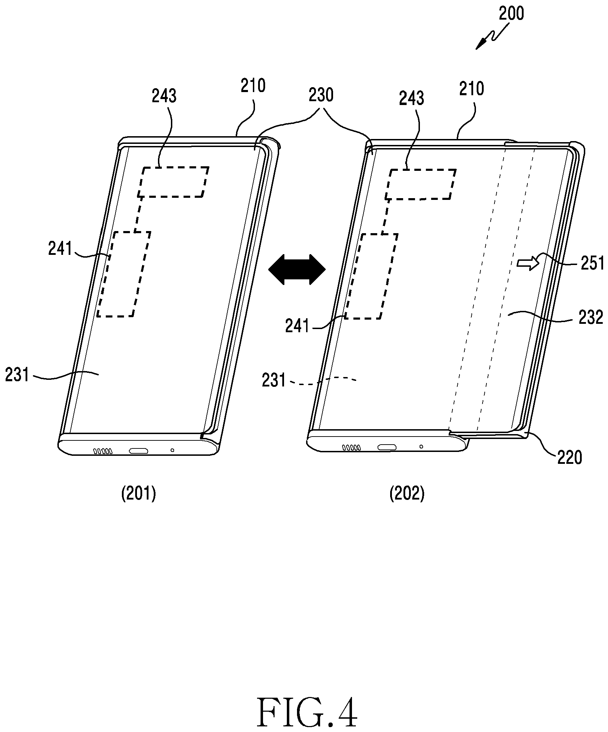

FIG. 2 is a view provided to explain an electronic device in a first state of a flexible display according to an embodiment of the disclosure, FIG. 3 is a view provided to explain the electronic device in a second state of the flexible display according to an embodiment of the disclosure, and FIG. 4 is a front perspective view of the electronic device provided to explain change of the state of the flexible display according to an embodiment of the disclosure.

Referring to FIGS. 2 to 4, the electronic device 200 (for example, the electronic device 101 of FIG. 1) may include a housing 210, a flexible display 230, a motor 241, and a processor 243. However, components of the electronic device 200 are not limited thereto. According to various embodiments, the electronic device 200 may further include at least one other component in addition to the above-described components.

The housing 210 may include a first surface (or a front surface) 211, a second surface (or a rear surface) 212, and side surfaces 213, 214, 215, 216 surrounding a space between the first surface 211 and the second surface 212 at least in part. In another embodiment, the housing 210 may refer to a structure that forms the first surface 211, the second surface 212, and a part of the side surfaces 213, 214, 215, 215.

According to an embodiment, the first surface 211 may be formed by a front surface plate having at least part substantially transparent (for example, a glass plate including various coating layers, or a polymer plate). The front surface plate may be disposed to cover the front surface of the flexible display 230.

The second surface 212 may be formed by a rear surface plate which is substantially opaque. The rear surface plate may be formed by, for example, coated or colored glass, ceramic, a polymer, metal (for example, aluminum, stainless steel (STS), or magnesium), or a combination of at least two of the above-mentioned materials. The rear surface plate may form the rear surface of the electronic device 200. According to an embodiment, the rear surface plate may further include a portion that is extended toward the front surface of the electronic device 200, and the extended portion may form a part of the side surfaces of the electronic device 200.

The side surfaces 213, 214, 215, 216 may be formed by a side surface bezel structure (or a side surface member) which is coupled with the front surface plate and the rear surface plate, and includes metal and/or a polymer. A first side surface (or an upper side surface) 213 and a second side surface (or a lower side surface) 214 of the side surfaces 213, 214, 215, 216 may have a shape of a cover (side cover). A third side surface (or a left side surface) 215 of the side surfaces 213, 214, 215, 216 may be formed by a portion of the front surface plate that is bent toward the rear surface plate and is seamlessly extended. A fourth side surface (or a right side surface) 216 of the side surfaces 213, 214, 215, 216 may be formed by a side surface 223 of a slide plate 220 that is coupled between the front surface plate and the rear surface plate to be movable through a sliding operation, and a portion of the front surface plate that is bent toward the rear surface plate and is seamlessly extended.

The slide plate 220 may slide in an inner space of the housing 210 in a direction toward the side surface of the housing 210 (for example, an outward direction 251 of the housing 210 or the reverse direction of the outward direction 251 (inward direction of the housing)). Accordingly, the flexible display 230 which is coupled onto the slide plate 220 may slide in the direction toward the side surface, such that a display area of the flexible display 230 is extended or contracted. According to an embodiment, the slide plate 220 may have an opening formed on an area that is adjacent to the side surface 223 in the direction in which the slide plate 220 is drawn out from the inside of the housing 210 to the outside (for example, the outward direction 251 of the housing 210). In addition, the slide plate 220 may be coupled with a decoration member that is disposed to cover the opened area.

According to an embodiment, electronic components may be disposed in a space between the first surface 211 (for example, the front surface plate), the second surface 212 (for example, the rear surface plate), and the side surfaces 213, 214, 215, 216 (for example, the side cover and an extended portion of the rear surface plate) of the housing 210. For example, the motor 241 and a printed circuit board may be disposed in the space. Various electronic elements (for example, the processor 243, 120 or the memory 130) may be mounted on the printed circuit board.

The flexible display 230 may be visually exposed to the outside through a substantial portion of the front surface plate. The flexible display 230 may be movably coupled to the housing 210. According to an embodiment, the flexible display 230 may be coupled onto a front surface 221 of the slide plate 220, and may have at least part of the display area visually and selectively exposed to the outside by a sliding operation of the slide plate 220.

In an embodiment, when at least part of the slide plate 220 is drawn into the housing 210 (for example, the state disclosed in FIG. 2 and a first state 201 of FIG. 4), that is, a hinge member (for example, a caterpillar joint or multi-joint hinge) of the slide pate 220 is rolled into the housing 210 in the inward direction, at least part of the flexible display 230 may be positioned inside the housing 210 and may not be exposed to the outside. To this end, the electronic device may have a display area 231 of a first size (for example, a size that is determined by a first width w1 (or a horizontal length) and a first height (or a vertical length)). In another example, when at least part of the slide plate 220 is drawn out to the outside of the housing 210 (for example, the state disclosed in FIG. 3 and a second state 202 of FIG. 4), that is, the hinge member of the slide plate 220 is spread in the outward direction 251 of the housing 210, the flexible display 230 may be moved in the outward direction 251 and a portion that is not exposed to the outside may be exposed to the outside. To this end, the electronic device may have a display area 232 of a second size that is larger than the first size (for example, a size that is determined by a second width w2 and the first height).

FIGS. 2 to 4 illustrate a state in which the flexible display 230 is extended or contracted in a direction toward one side (for example, a rightward direction (the outward direction 251 of the housing 210) or a leftward direction (the reverse direction of the outward direction 251 (inward direction of the housing))). However, this should not be considered as limiting. According to an embodiment, the flexible display 230 may have a state in which the flexible display 230 is extended or contracted in a direction substantially perpendicular to the one side (for example, an upward direction or a downward direction). For example, the first size of the display area 231 in the first state 201 may be determined by the first width w1 and the first height, and the second size of the display area 232 in the second state 202 may be determined by the first width w1 and a second height that is higher than the first height. According to another embodiment, the flexible display 230 may have a state in which the flexible display 230 is extended or contracted in a diagonal direction (for example, a right upward direction or a left downward direction). For example, the first size of the display area 231 in the first state 201 may be determined by the first width w1 and the first height, and the second size of the display area 232 in the second state 202 may be determined by the second width w2 and the second height. In other words, the first state 201 may indicate a state in which the display area of the flexible display 230 is contracted, and the second state 202 may indicate a state in which the display area of the flexible display 230 is extended.

The state (for example, the first state 201 or the second state 202) of the flexible display 230 described above may be changed by a sliding motion of the slide plate 220 that is made by rotation of a roller connected (or contacting) the hinge member of the slide plate 220. According to an embodiment, the roller may be provided in a bar-like shape, and may perform a rotational motion. According to an embodiment, the roller may perform a rotational motion according to driving of the motor 241 under control of the processor 243. For example, when the roller rotates in a first direction according to driving of the motor 241, the hinge member may be rolled in the housing in the inward direction along an outer circumference of the roller, and accordingly, the display area of the flexible display 230 that is visually exposed to the outside may be contracted. On the other hand, when the roller rotates in a second direction which is the opposite direction of the first direction according to driving of the motor 241, the hinge member may be spread in the outward direction of the housing 210 along the outer circumference of the roller, and accordingly, the display area of the flexible display 230 that is visually exposed to the outside may be extended

The flexible display 230 may display various contents (for example, a text, an image, a video, an icon, or a symbol) for a user. The flexible display 230 may include a touch screen, and for example, may receive an input of a touch, gesture, approach, or hovering using a part of user's body. The flexible display 230 may be electrically connected with a display driver integrated circuit (IC) (DDI). According to an embodiment, the display driver IC may be disposed on a flexible printed circuit board disposed on the rear surface of the slide plate 220.

The processor 243 may control at least one component of the electronic device 200, and may perform various data processing or computing operations. According to an embodiment, the processor 243 may perform a function related to control of the flexible display 230 by executing an instruction stored in the memory. For example, the processor 243 may drive the motor 241 to extend or contract the display area of the flexible display 230.

Heat from the motor 241 may be influenced by a driving duration time of the motor 241 more than by a driving speed of the motor 241. For example, the temperature of the motor 241 may slightly increase even when the driving speed of the motor 241 increases, and the temperature of the motor 241 may greatly increase as the driving duration time of the motor 241 increases. In addition, the time required to change the state of the flexible display 230 may be determined by the driving speed and the driving duration time of the motor 241. For example, when the driving speed of the motor 241 is a first speed, the change of the state of the flexible display 230 may be completed if the driving duration time of the motor 241 is within a first time range value, and, when the driving speed of the motor 241 is a second speed which is faster than the first speed, the change of the state of the flexible display 230 may be completed if the driving duration time of the motor 241 is within a second time range value which is shorter than the first time range value. Accordingly, considering that a deviation of heat of the motor 241 caused by the driving speed of the motor 241 is small, the processor 243 may prevent heat from the motor 241 by reducing the driving duration time of the motor 241 by increasing the driving speed of the motor 241 when heat is predicted due to driving of the motor 241.

According to an embodiment, heat caused by driving of the motor 241 may be predicted based on a driving pattern of the motor 241. The driving pattern of the motor 241 may include at least one of the number of times of driving the motor 241, a driving time of the motor 241, or a driving direction of the motor 241. The number of times of driving the motor 241 may indicate the number of times the motor 241 is driven to change the state of the flexible display 230, and may correspond to the number of times the flexible display 230 changes from the first state 201 to the second state 202, or the number of times the flexible display 230 changes from the second state 202 to the first state 201. The driving time of the motor 241 may correspond to a certain time in the driving duration time of the motor 241. For example, the driving time of the motor 241 may correspond to a driving start time or a driving end time of the motor 241. The driving direction of the motor 241 may include a first direction in which the display area of the flexible display 230 is extended, and a second direction in which the display area of the flexible display 230 is contracted. For example, when the driving direction of the motor 241 is the first direction, the flexible display 230 may change from a first state in which the display area of the flexible display 230 is contracted (for example, the state disclosed in FIG. 2 and the first state 201 of FIG. 4) to a second state in which the display area is extended (for example, the state disclosed in FIG. 3 and the second state 202 of FIG. 4). In addition, when the driving direction of the motor 241 is the second direction which is the opposite direction of the first direction, the flexible display 230 may change from the second state in which the display area is extended to the first state in which the display area is contracted. For example, as the number of times of driving of the motor 241 increases, the possibility of heat caused by driving of the motor 241 may increase. In another example, as an interval between driving times of the motor 241 is smaller, the possibility of heat caused by driving of the motor 241 may increase. The interval between driving times of the motor 241 may indicate a difference value between a first driving time at which the motor 241 is driven in response to a first input, and a second driving time at which the motor 241 is driven in response to a second input which is received before the first input.

According to an embodiment, the processor 243 may store the driving pattern of the motor 241. For example, when an input for driving the motor 241 is received, the processor 243 may store the number of times of driving the motor 241. For example, when a first input for driving the motor 241 is received, the processor 243 may store the number of times of driving the motor 241 with a value indicating first driving (for example, one time), and, when a new input (for example, a second input) for driving the motor 241 is received afterwards, the processor 243 may increase the number of times of driving the motor 241 (for example, two times) and may store the same. In another example, when an input for driving the motor 241 is received, the processor 243 may store a driving time of the motor 241 (for example, a driving start time or a driving end time of the motor 241). According to an embodiment, the processor 243 may store only a driving time corresponding to a last input for driving the motor 241 (for example, a last driving time of the motor 241). For example, when a first input for driving the motor 241 is received, the processor 243 may store a first driving time of the motor 241 which is driven in response to the first input as the driving time of the motor 241, and, when a new input (for example, a second input) for driving the motor 241 is received afterwards, the processor 243 may store (or change) a second driving time of the motor 241 which is driven in response to the new input as the driving time of the motor 241. In another example, when an input for driving the motor 241 is received, the processor 243 may store a value indicating the number of times of driving the motor 241, and the driving time of the motor 241.

According to an embodiment, when an input for driving the motor 241 is received, the processor 24 may determine a driving speed of the motor 241, based on the driving pattern of the motor 241. For example, when the number of times of driving the motor 241 among the driving patterns of the motor 241 is less than a first reference value, the processor 243 may determine the driving speed of the motor 241 as a first speed, and, when the number of times of driving the motor 241 is greater than or equal to the first reference value, the processor 243 may determine the driving speed of the motor 241 as a second speed that is faster than the first speed. In another example, the processor 243 may calculate a difference value between the driving time (for example, the last driving time) of the motor 241 among the driving patterns of the motor 241, and a current time. For example, the processor 243 may calculate a difference value between a driving time at which the motor 241 is driven lastly before the input is received, and the current time. In addition, when the difference value is greater than or equal to a second reference value, the processor 243 may determine the driving speed of the motor 241 as a third speed, and, when the difference value is less than the second reference value, the processor 243 may determine the driving speed of the motor 241 as a fourth speed that is faster than the third speed. According to an embodiment, the third speed may be the same as or different from the first speed, and the fourth speed may be the same as or different from the second speed. In still another example, when the driving direction of the motor 241 among the driving patterns of the motor 241 is a direction that causes the display area of the flexible display 230 to be extended (for example, a direction that causes the flexible display 230 to be changed from the first state 201 to the second state 202), the processor 243 may determine the driving speed of the motor 241 as a fifth speed. In addition, when the driving direction of the motor 241 is a direction that causes the display area of the flexible display 230 to be contracted (for example, a direction that causes the flexible display 230 to be changed from the second state 202 to the first state 201), the processor 243 may determine the driving speed of the motor 241 as a sixth speed that is faster than the fifth speed. According to an embodiment, the fifth speed may be the same as or different from the first speed, and the sixth speed may be the same as or different from the second speed.

According to an embodiment, when at least one input for driving the motor 241 is received while each of a plurality of applications is being executed, the processor 243 may map the number of times of driving the motor 241 which is driven in response to the at least one input, and identification information of an application (for example, a name of the application or a package name of the application) that is being executed at the time when the at least one input is received from among the plurality of applications, and may store the mapping information in the memory. For example, the processor 243 may map the number of times of driving the motor 241 which is driven while a first application is being executed (for example, the first number of times), and identification information of the first application, and may store the mapping information in the memory, and may map the number of times of driving the motor 241 which is driven while a second application different from the first application is being executed (for example, the second number of times), and identification information of the second application, and may store the mapping information in the memory. For example, the processor 243 may identify the number of times of driving the motor 241 according to each application, and may store the same in the memory.

According to an embodiment, the processor 243 may determine the first reference value for comparing the number of times of driving, based on the number of times of driving the motor 241, which is stored according to each application. For example, in response to an input for driving the motor 241 being received, the processor 243 may identify an application (for example, the first application or the second application) that is being executed at the time when the input is received from among the plurality of applications. In addition, the processor 243 may identify the number of times of driving the motor 241 (for example, the first number of times or the second number of times) that is mapped onto identification information of the identified application in the memory. In addition, the processor 243 may determine the first reference value, based on the identified number of times of driving the motor 241. According to an embodiment, when the identified number of times of driving the motor 241 is less than a designated value, the processor 243 may determine the first reference value as a first value, and, when the identified number of times of driving the motor 241 is greater than or equal to the designated value, the processor 243 may determine the first reference value as a second value that is smaller than the first value. For example, the processor 243 may determine the first reference value to be smaller as the motor 241 is driven more while the identified application is being executed, so that the driving speed of the motor 241 is made to be a fast speed (the second speed).

According to an embodiment, the processor 243 may store the number of times of driving the motor 241 in the memory irrespective of an application. In addition, the processor 243 may determine (or change) the first reference value for comparing the number of times of driving the motor 241, based on a user input.

According to an embodiment, the processor 243 may change the number of times of driving the motor 241. For example, the number of times of driving the motor 241 may increase every time an input for driving the motor 241 is received, and, when the input is received more than a predetermined number of times, the number of times of driving the motor 241 may always be greater than or equal to the first reference value. Accordingly, the processor 243 may calibrate (change) the number of times of driving the motor 241, based on a difference value between the driving time (last driving time) at which the motor 241 is driven lastly before the input is received among the driving patterns of the motor 241, and the current time. According to an embodiment, the processor 243 may calculate a difference value between the last driving time of the motor 241 and the current time. In addition, the processor 243 may change the number of times of driving the motor 241, based on the difference value. For example, when the difference value is greater than or equal to a designated value (for example, 2 minutes), the processor 243 may reduce the number of times of driving the motor 241.

According to an embodiment, the processor 243 may differently determine a change value of the number of times of driving the motor 241, according to a size of the difference value (the difference value between the last driving time of the motor 241 and the current time). For example, when the difference value is greater than or equal to the designated value (for example, 2 minutes) and is less than a first value (for example, one hour), the processor 243 may reduce the number of times of driving the motor 241 to a value that is obtained by multiplying the number of times of driving the motor 241 by a first constant (for example, 0.5) that is smaller than 1. In another example, when the difference value is greater than or equal to the first value and is less than a second value (for example, 12 hours), the processor 243 may reduce the number of times of driving the motor 241 to a value that is obtained by multiplying the number of times of driving the motor 241 by a second constant (for example, 0.25) that is smaller than the first constant. In still another example, when the difference value is greater than or equal to the second value and is less than a third value (for example, 24 hours), the processor 243 may reduce the number of times of driving the motor 241 to a value that is obtained by multiplying the number of times of driving the motor 241 by a third constant (for example, 0.125) that is smaller than the second constant. In yet another example, when the difference value is greater than or equal to the third value, the processor 243 may set the number of times of driving the motor 241 to 0.

According to an embodiment, when the temperature of the electronic device 200 measured through a temperature sensor (for example, the sensor module 176 of FIG. 1) is greater than or equal to a designated value, the processor 243 may determine the driving speed of the motor 241 as the second speed. For example, when the number of times of driving the motor 241 is less than the first reference value, the processor 243 may determine the driving speed of the motor 241 as the second speed other than the first speed if the temperature of the electronic device 200 measured through the temperature sensor is greater than or equal to the designated value.

According to various embodiments as described above, an electronic device (for example, the electronic device 101 or the electronic device 200) may include: a flexible display (for example, the display module 160 or the flexible display 230) including a first state (for example, the state disclosed in FIG. 2 or the first state 201 of FIG. 4) in which a display area has a first size, and a second state (for example, the state disclosed in FIG. 3 or the second state 202 of FIG. 4) in which the display area is extended in a first direction to have a second size that is larger than the first size; a motor (for example, the motor 241) driven to change the state of the flexible display; and a processor (for example, the processor 120 or the processor 243) operatively connected with the flexible display and the motor, and the processor may be configured to determine a driving speed of the motor based on a driving pattern of the motor when an input for driving the motor is received, and to drive the motor based on the driving speed of the motor.

According to various embodiments, the processor may be configured to, when a number of times of driving the motor among the driving patterns of the motor is less than a reference value, determine the driving speed of the motor as a first speed, and, when the number of times of driving the motor is greater than or equal to the reference value, determine the driving speed of the motor as a second speed that is faster than the first speed.

According to various embodiments, the electronic device may further include a memory (for example, the memory 130) operatively connected with the processor, and the processor may be configured to map, when at least one input for driving the motor is received while each of a plurality of applications is being executed, the number of times of driving the motor that is driven in response to the at least one input, and identification information of an application that is being executed at a time when the at least one input is received from among the plurality of applications, and to store the mapping information in the memory.

According to various embodiments, the processor may be configured to: in response to the input being received, identify the application that is being executed at the time when the input is received from among the plurality of applications; identify the number of times of driving the motor, which is mapped onto the identification information of the identified application in the memory; and determine the reference value based on the identified number of times of driving the motor.

According to various embodiments, the processor may be configured to: determine the reference value as a first value when the identified number of times of driving the motor is less than a designated value; and determine the reference value as a second value that is smaller than the first value when the identified number of times of driving the motor is greater than or equal to the designated value.

According to various embodiments, the processor may be configured to: calculate a difference value between a driving time at which the motor is driven lastly before the input is received among the driving patterns of the motor, and a current time; and change the number of times of driving the motor based on the difference value.

According to various embodiments, the processor may be configured to reduce the number of times of driving the motor when the difference value is greater than or equal to a designated value.

According to various embodiments, the electronic device may further include a temperature sensor (for example, the sensor module 176) operatively connected with the processor, and the processor may be configured to determine the driving speed of the motor as the second speed when a temperature of the electronic device measured through the temperature sensor is greater than or equal to a designated value.

According to various embodiments, the processor may be configured to: calculate a difference value between a driving time at which the motor is driven lastly before the input is received among the driving patterns of the motor, and a current time; determine the driving speed of the motor as a first speed when the difference value is greater than or equal to a reference value; and determine the driving speed of the motor as a second speed that is faster than the first speed when the difference value is less than the reference value.

According to various embodiments, the processor may be configured to: determine the driving speed of the motor as a first speed when a driving direction of the motor among the driving patterns of the motor is a direction that causes the flexible display to be changed from the first state to the second state; and determine the driving speed of the motor as a second speed that is faster than the first speed when the driving direction of the motor is a direction that causes the flexible display to be changed from the second state to the first state.

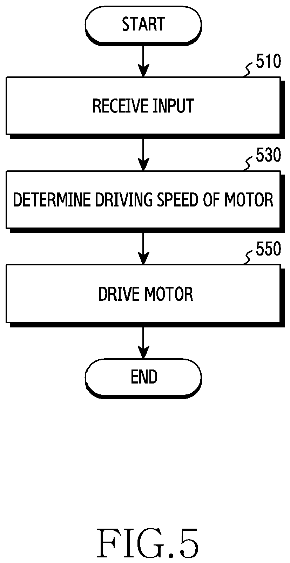

FIG. 5 is a view provided to explain a method of controlling a display by adjusting a driving speed of a motor according to an embodiment of the disclosure.

Referring to FIG. 5, in action 510, a processor (for example, the processor 243) of an electronic device (for example, the electronic device 200) may receive an input for driving a motor (for example, the motor 241) which is driven to change a state of a flexible display (for example, the flexible display 230).

When the input for driving the motor is received, the processor may determine a driving speed of the motor based on a driving pattern of the motor in action 530. For example, when the number of times of driving the motor among the driving patterns of the motor is less than a first reference value, the processor may determine the driving speed of the motor as a first speed, and, when the number of times of driving the motor is greater than or equal to the first reference value, the processor may determine the driving speed of the motor as a second speed that is faster than the first speed. According to another embodiment, the processor may calculate a difference value between a driving time (for example, a last driving time) of the motor among the driving patterns of the motor, and a current time. For example, the processor may calculate a difference value between a driving time at which the motor is driven lastly before the input is received, and the current time. In addition, when the difference value is greater than or equal to a second reference value, the processor may determine the driving speed of the motor as a third speed, and, when the difference value is less than the second reference value, the processor may determine the driving speed of the motor as a fourth speed that is faster than the third speed. Herein, the third speed may be the same as or different from the first speed, and the fourth speed may be the same as or different from the second speed. According to still another embodiment, when a driving direction of the motor among the driving patterns of the motor is a direction that causes a display area of the flexible display to be extended, the processor may determine the driving speed of the motor as a fifth speed, and, when the driving direction of the motor is a direction that causes the display area of the flexible display to be contracted, the processor may determine the driving speed of the motor as a sixth speed that is faster than the fifth speed. Herein, the fifth speed may be the same as or different from the first speed, and the sixth speed may be the same as or different from the second speed.

In action 550, the processor may drive the motor based on the driving speed of the motor determined.

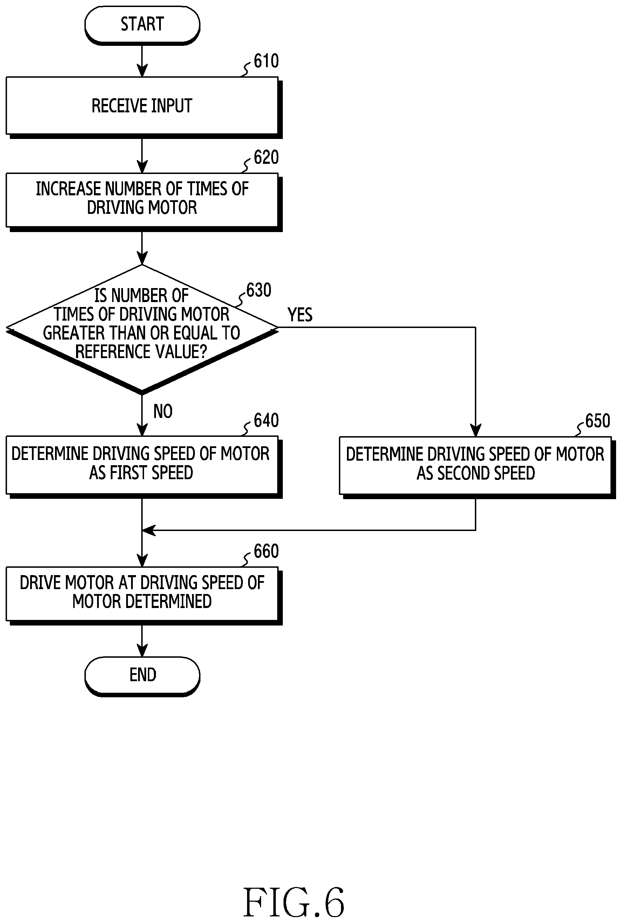

FIG. 6 is a view provided to explain a method of adjusting a driving speed of a motor based on the number of times of driving the motor according to an embodiment of the disclosure.

Referring to FIG. 6, in action 610, a processor (for example, the processor 243) of an electronic device (for example, the electronic device 200) may receive an input for driving a motor (for example, the motor 241) which is driven to change a state of a flexible display (for example, the flexible display 230).

In action 620, the processor may increase the number of times of driving the motor. For example, when a first input for driving the motor is received, the processor may store the number of times of driving the motor with a value indicating first driving (for example, one time), and, when a new input (for example, a second input) for driving the motor is received afterwards, the processor may increase the number of times of driving the motor (for example, two times) and may store the same. According to an embodiment, action 620 may be performed after action 630.

In action 630, the processor may determine whether the number of times of driving the motor is greater than or equal to a reference value. When the number of times of driving the motor is less than the reference value (No in action 630), the processor may determine the driving speed of the motor as a first speed in action 640. When the number of times of driving the motor is greater than or equal to the reference value (Yes in action 630), the processor may determine the driving speed of the motor as a second speed in action 650. According to an embodiment, the second speed may be faster than the first speed.

In action 660, the processor may drive the motor at the driving speed of the motor determined.

According to an embodiment, when at least one input for driving the motor is received while each of a plurality of applications is being executed, the processor may map the number of times of driving the motor which is driven in response to the at least one input, and identification information of an application (for example, a name of the application or a package name of the application) that is being executed at the time when the at least one input is received from among the plurality of applications, and may store the mapping information in a memory. For example, the processor may map the number of times of driving the motor which is driven while a first application is being executed (for example, the first number of times), and identification information of the first application, and may store the mapping information in the memory, and may map the number of times of driving the motor which is driven while a second application different from the first application is being executed (for example, the second number of times), and identification information of the second application, and may store the mapping information in the memory. For example, the processor may identify the number of times of driving the motor according to each application, and may store the same in the memory.

According to an embodiment, the processor may determine the reference value for comparing the number of times of driving, based on the number of times of driving the motor, which is stored according to each application. For example, in response to an input for driving the motor being received, the processor may identify an application (for example, the first application or the second application) that is being executed at the time when the input is received from among the plurality of applications. In addition, the processor may identify the number of times of driving the motor (for example, the first number of times or the second number of times) that is mapped onto identification information of the identified application in the memory. In addition, the processor may determine the reference value, based on the identified number of times of driving the motor. According to an embodiment, when the identified number of times of driving the motor is less than a designated value, the processor may determine the reference value as a first value, and, when the identified number of times of driving the motor is greater than or equal to the designated value, the processor may determine the reference value as a second value that is smaller than the first value. For example, the processor may determine the reference value to be smaller as the motor is driven more while the identified application is being executed, so that the driving speed of the motor is made to be a fast speed (the second speed).

According to an embodiment, the processor may store the number of times of driving the motor in the memory irrespective of an application. In addition, the processor may determine (or change) the reference value for comparing the number of times of driving the motor, based on a user input.

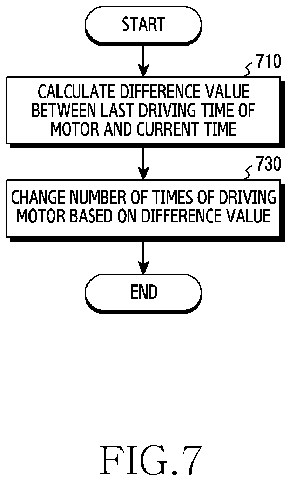

FIG. 7 is a view provided to explain a method of calibrating the number of times of driving a motor according to an embodiment of the disclosure. Actions of calibrating the number of times of driving the motor, which will be described in FIG. 7, are related to action 620 of FIG. 6, and may be performed after action 620 of FIG. 6 or in parallel therewith.

The number of times of driving a motor (for example, the motor 241) may increase every time an input for driving the motor is received, and, when the input is received more than a predetermined number of times, the number of times of driving the motor may always be greater than or equal to the reference value. Accordingly, a processor (for example, the processor 243) may calibrate (change) the number of times of driving the motor, based on a difference value between a driving time (last driving time) at which the motor is driven lastly before the input is received among the driving patterns of the motor, and a current time.

Referring to FIG. 7, in action 710, the processor may calculate a difference value between the last driving time of the motor and the current time.

In action 730, the processor may change the number of times of driving the motor, based on the difference value. For example, when the difference value is greater than or equal to a designated value (for example, 2 minutes), the processor may reduce the number of times of driving the motor.

According to an embodiment, the processor may differently determine a change value of the number of times of driving the motor, according to a size of the difference value. For example, when the difference value is greater than or equal to the designated value (for example, 2 minutes) and is less than a first value (for example, one hour), the processor may reduce the number of times of driving the motor to a value that is obtained by multiplying the number of times of driving the motor by a first constant (for example, 0.5) that is smaller than 1. In another example, when the difference value is greater than or equal to the first value and is less than a second value (for example, 12 hours), the processor may reduce the number of times of driving the motor to a value that is obtained by multiplying the number of times of driving the motor by a second constant (for example, 0.25) that is smaller than the first constant. In still another example, when the difference value is greater than or equal to the second value and is less than a third value (for example, 24 hours), the processor may reduce the number of times of driving the motor to a value that is obtained by multiplying the number of times of driving the motor by a third constant (for example, 0.125) that is smaller than the second constant. In yet another example, when the difference value is greater than or equal to the third value, the processor may set the number of times of driving the motor to 0.

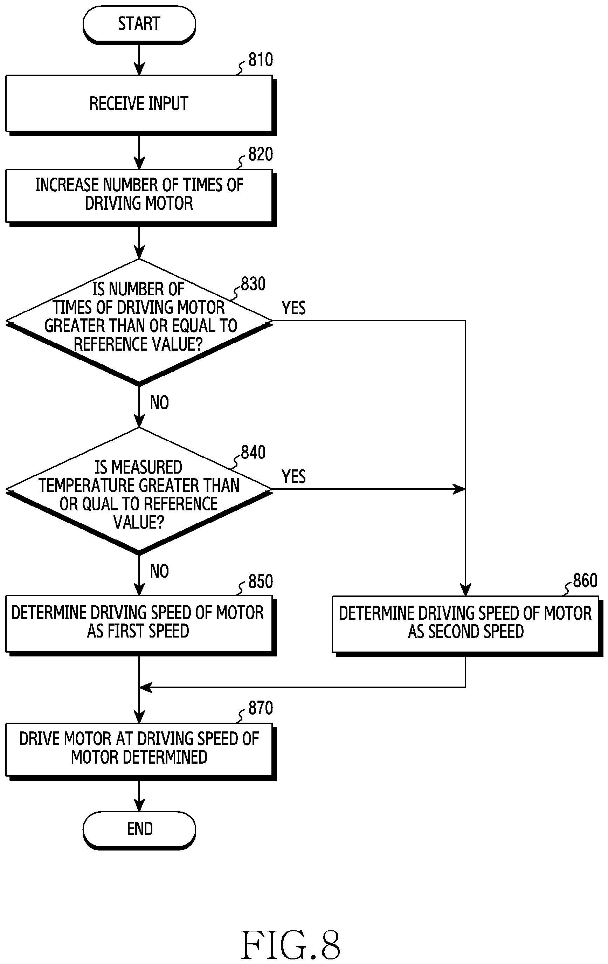

FIG. 8 is a view provided to explain a method of adjusting a driving speed of a motor based on the number of times of driving the motor and a measured temperature of an electronic device according to an embodiment of the disclosure.

Referring to FIG. 8, in action 810, a processor (for example, the processor 243) of an electronic device (for example, the electronic device 200) may receive an input for driving a motor (for example, the motor 241) which is driven to change a state of a flexible display (for example, the flexible display 230).

In action 820, the processor may increase the number of times of driving the motor. For example, when a first input for driving the motor is received, the processor may store the number of times of driving the motor with a value indicating first driving (for example, one time), and, when a new input (for example, a second input) for driving the motor is received afterwards, the processor may increase the number of times of driving the motor (for example, two times) and may store the same. According to an embodiment, action 820 may be performed after action 830.

In action 830, the processor may determine whether the number of times of driving the motor is greater than or equal to a reference value. When the number of times of driving the motor is less than the reference value (No in action 830), the processor may determine whether a temperature of the electronic device measured through a temperature sensor (for example, the sensor module 176 of FIG. 1) is greater than or equal to a designated value in action 840.

When the temperature of the electronic device is less than the designated value (No in action 840), the processor may determine a driving speed of the motor as a first speed in action 850. When the number of times of driving the motor is greater than or equal to the reference value (Yes in action 830) or the temperature of the electronic device is greater than or equal to the designated value (Yes in action 840), the processor may determine the driving speed of the motor as a second speed in action 860. For example, when the number of times of driving the motor is less than the reference value, the processor may determine the driving speed of the motor as the second speed other than the first speed if the temperature of the electronic device measured through the temperature sensor is greater than or equal to the designated value. According to an embodiment, the second speed may be faster than the first speed.

In action 870, the processor may drive the motor at the driving speed of the motor determined.

According to an embodiment, when at least one input for driving the motor is received while each of a plurality of applications is being executed, the processor may map the number of times of driving the motor which is driven in response to the at least one input, and identification information of an application (for example, a name of the application or a package name of the application) that is being executed at the time when the at least one input is received from among the plurality of applications, and may store the mapping information in a memory. For example, the processor may map the number of times of driving the motor which is driven while a first application is being executed (for example, the first number of times), and identification information of the first application, and may store the mapping information in the memory, and may map the number of times of driving the motor which is driven while a second application different from the first application is being executed (for example, the second number of times), and identification information of the second application, and may store the mapping information in the memory. For example, the processor may identify the number of times of driving the motor according to each application, and may store the same in the memory.

According to an embodiment, the processor may determine the reference value for comparing the number of times of driving, based on the number of times of driving the motor, which is stored according to each application. For example, in response to an input for driving the motor being received, the processor may identify an application (for example, the first application or the second application) that is being executed at the time when the input is received from among the plurality of applications. In addition, the processor may identify the number of times of driving the motor (for example, the first number of times or the second number of times) that is mapped onto identification information of the identified application in the memory. In addition, the processor may determine the reference value, based on the identified number of times of driving the motor. According to an embodiment, when the identified number of times of driving the motor is less than a designated value, the processor may determine the reference value as a first value, and, when the identified number of times of driving the motor is greater than or equal to the designated value, the processor may determine the reference value as a second value that is smaller than the first value. For example, the processor may determine the reference value to be smaller as the motor is driven more while the identified application is being executed, so that the driving speed of the motor is made to be a fast speed (the second speed).

According to an embodiment, the processor may store the number of times of driving the motor in the memory irrespective of an application. In addition, the processor may determine (or change) the reference value for comparing the number of times of driving the motor, based on a user input.

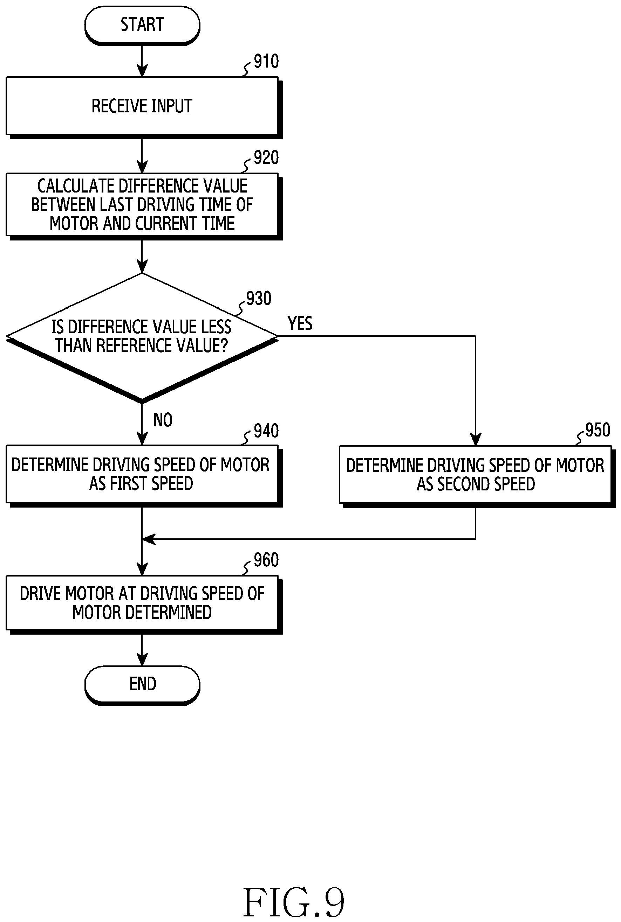

FIG. 9 is a view provided to explain another method of adjusting a driving speed of a motor based on a driving time of the motor according to an embodiment of the disclosure.

Referring to FIG. 9, in action 910, a processor (for example, the processor 243) of an electronic device (for example, the electronic device 200) may receive an input for driving a motor (for example, the motor 241) which is driven to change a state of a flexible display (for example, the flexible display 230).

In action 920, the processor may calculate a difference value between a last driving time of the motor and a current time. For example, the processor may calculate a difference value between a driving time at which the motor is driven lastly before the input is received, and the current time.

In action 930, the processor may determine whether the difference value is less than a reference value. When the difference value is greater than or equal to the reference value (No in action 930), the processor may determine the driving speed of the motor as a first speed in action 940. When the difference value is less than the reference value (Yes in action 930), the processor may determine the driving speed of the motor as a second speed in action 950. According to an embodiment, the second speed may be faster than the first speed.

In action 960, the processor may drive the motor at the driving speed of the motor determined.

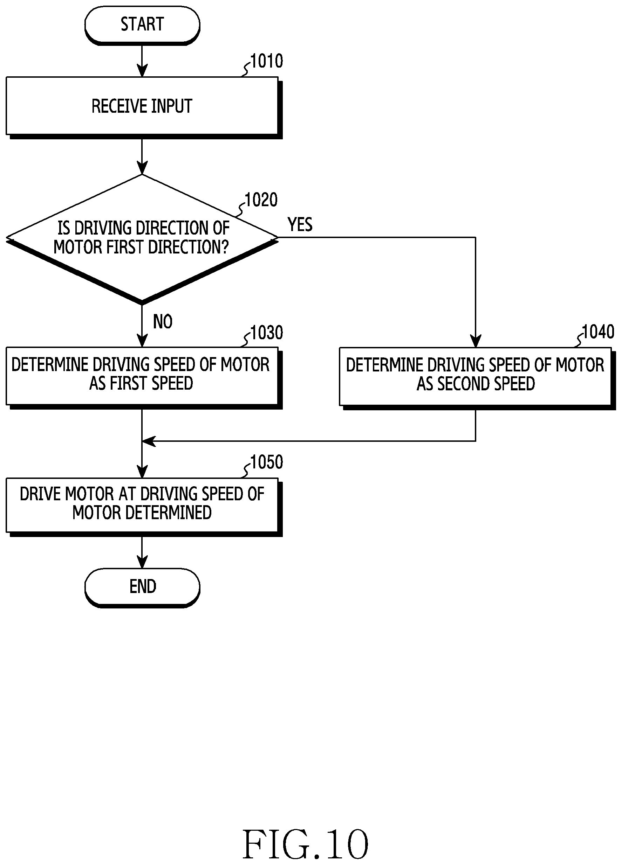

FIG. 10 is a view provided to explain a method of adjusting a driving speed of a motor based on a driving direction of the motor according to an embodiment of the disclosure.

Referring to FIG. 10, in action 1010, a processor (for example, the processor 243) of an electronic device (for example, the electronic device 200) may receive an input for driving a motor (for example, the motor 241) which is driven to change a state of a flexible display (for example, the flexible display 230).

In action 1020, the processor may determine whether a driving direction of the motor is a first direction. According to an embodiment, the first direction may be a direction that causes a display area of the flexible display to be contracted (for example, a direction that causes the flexible display to be changed from the second state 202 of FIG. 4 to the first state 201 of FIG. 4).

When the driving direction of the motor is a second direction which is the opposite direction of the first direction (No in action 1020), the processor may determine the driving speed of the motor as a first speed in action 1030. According to an embodiment, the second direction may be a direction that causes the display area of the flexible display to be extended (for example, a direction that causes the flexible display to be changed from the first state 201 of FIG. 4 to the second state 202 of FIG. 4). When the driving direction of the motor is the first direction (Yes in action 1020), the processor may determine the driving speed of the motor as a second speed in action 1040. According to an embodiment, the second speed may be faster than the first speed.

In action 1050, the processor may drive the motor at the driving speed of the motor determined.

According to various embodiments as described above, a display control method of an electronic device (for example, the electronic device 101 or the electronic device 200) may include: receiving an input for driving a motor (for example, the motor 241) which is driven to change a state of a flexible display (for example, the display module 160 or the flexible display 230) including a first state (for example, the state disclosed in FIG. 2 or the first state 201 of FIG. 4) in which a display area has a first size, and a second state (for example, the state disclosed in FIG. 3 or the second state 202 of FIG. 4) in which the display area is extended in a first direction to have a second size that is larger than the first size (for example, action 510, action 610, action 810, action 910, or action 1010); determining a driving speed of the motor based on a driving pattern of the motor (for example, action 530, action 640, 650, action 850, 860, action 940, 950, or action 1030, 1040); and driving the motor based on the driving speed of the motor (for example, action 550, action 660, action 870, action 960, or action 1050).

According to various embodiments, determining the driving speed of the motor may include: when a number of times of driving the motor among the driving patterns of the motor is less than a reference value, determining the driving speed of the motor as a first speed (for example, action 640); and, when the number of times of driving the motor is greater than or equal to the reference value, determining the driving speed of the motor as a second speed that is faster than the first speed (for example, action 650).

According to various embodiments, the display control method may further include: when at least one input for driving the motor is received while each of a plurality of applications is being executed, mapping the number of times of driving the motor that is driven in response to the at least one input, and identification information of an application that is being executed at a time when the at least one input is received from among the plurality of applications, and storing the mapping information in a memory (for example, the memory 130).

According to various embodiments, the display control method may further include: in response to the input being received, identifying the application that is being executed at the time when the input is received from among the plurality of applications; identifying the number of times of driving the motor, which is mapped onto the identification information of the identified application in the memory; and determining the reference value based on the identified number of times of driving the motor.

According to various embodiments, determining the reference value may include: determining the reference value as a first value when the identified number of times of driving the motor is less than a designated value; and determining the reference value as a second value that is smaller than the first value when the identified number of times of driving the motor is greater than or equal to the designated value.

According to various embodiments, the display control method may further include: calculating a difference value between a driving time at which the motor is driven lastly before the input is received among the driving patterns of the motor, and a current time (for example, action 710); and changing the number of times of driving the motor based on the difference value (for example, action 730).

According to various embodiments, changing the number of times of driving the motor may include reducing the number of times of driving the motor when the difference value is greater than or equal to a designated value.

According to various embodiments, determining the driving speed of the motor may further include determining the driving speed of the motor as the second speed when a temperature of the electronic device measured through a temperature sensor is greater than or equal to a designated value (for example, action 860).

According to various embodiments, determining the driving speed of the motor may include: calculating a difference value between a driving time at which the motor is driven lastly before the input is received among the driving patterns of the motor, and a current time (for example, action 920); determining the driving speed of the motor as a first speed when the difference value is greater than or equal to a reference value (for example, action 940); and determining the driving speed of the motor as a second speed that is faster than the first speed when the difference value is less than the reference value (for example, action 950).

According to various embodiments, determining the driving speed of the motor may further include: determining the driving speed of the motor as a first speed when a driving direction of the motor among the driving patterns of the motor is a direction that causes the flexible display to be changed from the first state to the second state (for example, action 1030); and determining the driving speed of the motor as a second speed that is faster than the first speed when the driving direction of the motor is a direction that causes the flexible display to be changed from the second state to the first state (for example, action 1040).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a flexible display including a first state in which a display area has a first size, and a second state in which the display area is extended in a first direction to have a second size that is larger than the first size;
a motor driven to change the state of the flexible display; and
a processor operatively connected with the flexible display and the motor,
wherein the processor is configured to determine a driving speed of the motor based on a driving pattern of the motor when an input for driving the motor is received, and to drive the motor based on the driving speed of the motor.

2. The electronic device of claim 1, wherein the processor is configured to, when a number of times of driving the motor among the driving patterns of the motor is less than a reference value, determine the driving speed of the motor as a first speed, and, when the number of times of driving the motor is greater than or equal to the reference value, determine the driving speed of the motor as a second speed that is faster than the first speed.

3. The electronic device of claim 2, further comprising a memory operatively connected with the processor,
wherein the processor is configured to map, when at least one input for driving the motor is received while each of a plurality of applications is being executed, the number of times of driving the motor that is driven in response to the at least one input, and identification information of an application that is being executed at a time when the at least one input is received from among the plurality of applications, and to store the mapping information in the memory.

4. The electronic device of claim 3, wherein the processor is configured to:
in response to the input being received, identify the application that is being executed at the time when the input is received from among the plurality of applications;
identify the number of times of driving the motor, which is mapped onto the identification information of the identified application in the memory; and
determine the reference value based on the identified number of times of driving the motor.

5. The electronic device of claim 4, wherein the processor is configured to:
determine the reference value as a first value when the identified number of times of driving the motor is less than a designated value; and
determine the reference value as a second value that is smaller than the first value when the identified number of times of driving the motor is greater than or equal to the designated value.

6. The electronic device of claim 2, wherein the processor is configured to:
calculate a difference value between a driving time at which the motor is driven lastly before the input is received among the driving patterns of the motor, and a current time; and
change the number of times of driving the motor based on the difference value.

7. The electronic device of claim 6, wherein the processor is configured to reduce the number of times of driving the motor when the difference value is greater than or equal to a designated value.

8. The electronic device of claim 2, further comprising a temperature sensor operatively connected with the processor,
wherein the processor is configured to determine the driving speed of the motor as the second speed when a temperature of the electronic device measured through the temperature sensor is greater than or equal to a designated value.

9. The electronic device of claim 1, wherein the processor is configured to:
calculate a difference value between a driving time at which the motor is driven lastly before the input is received among the driving patterns of the motor, and a current time;
determine the driving speed of the motor as a first speed when the difference value is greater than or equal to a reference value; and
determine the driving speed of the motor as a second speed that is faster than the first speed when the difference value is less than the reference value.

10. The electronic device of claim 1, wherein the processor is configured to:
determine the driving speed of the motor as a first speed when a driving direction of the motor among the driving patterns of the motor is a direction that causes the flexible display to be changed from the first state to the second state; and
determine the driving speed of the motor as a second speed that is faster than the first speed when the driving direction of the motor is a direction that causes the flexible display to be changed from the second state to the first state.

11. A display control method of an electronic device, the display control method comprising:
receiving an input for driving a motor which is driven to change a state of a flexible display, the flexible display including a first state in which a display area has a first size, and a second state in which the display area is extended in a first direction to have a second size that is larger than the first size;
determining a driving speed of the motor based on a driving pattern of the motor; and
driving the motor based on the driving speed of the motor.

12. The display control method of claim 11, where determining the driving speed of the motor comprises:
when a number of times of driving the motor among the driving patterns of the motor is less than a reference value, determining the driving speed of the motor as a first speed; and
when the number of times of driving the motor is greater than or equal to the reference value, determining the driving speed of the motor as a second speed that is faster than the first speed.

13. The display control method of claim 12, wherein determining the driving speed of the motor further comprises determining the driving speed of the motor as the second speed when a temperature of the electronic device measured through a temperature sensor is greater than or equal to a designated value.

14. The display control method of claim 11, wherein determining the driving speed of the motor comprises:
calculating a difference value between a driving time at which the motor is driven lastly before the input is received among the driving patterns of the motor, and a current time;
determining the driving speed of the motor as a first speed when the difference value is greater than or equal to a reference value; and
determining the driving speed of the motor as a second speed that is faster than the first speed when the difference value is less than the reference value.

15. The display control method of claim 11, wherein determining the driving speed of the motor further comprises:
determining the driving speed of the motor as a first speed when a driving direction of the motor among the driving patterns of the motor is a direction that causes the flexible display to be changed from the first state to the second state; and
determining the driving speed of the motor as a second speed that is faster than the first speed when the driving direction of the motor is a direction that causes the flexible display to be changed from the second state to the first state.
